# EUROPEAN PATENT APPLICATION

(11) **EP 4 787 256 A1**
(43) Date of publication of application: **05.08.2026**
(21) Application number: 24879716.9
(22) Date of filing: 16.10.2024
(51) Int. Cl.: G06Q 10/0631, G06Q 50/06

(54) **PIPELINE CONSTRUCTION PROCESS PLAN CREATION DEVICE, PROCESS PLAN CREATION SYSTEM, PROCESS PLAN CREATION METHOD, AND PROGRAM FOR CREATING PROCESS PLAN**

(30) Priority: 17.10.2023 JP 2023178962
(71) Applicant: Kubota Corporation, Osaka-shi, Osaka 530-0011 (JP)
(72) Inventor: ITO, Kazuya, Amagasaki-shi, Hyogo 660-0095 (JP)
(74) Representative: Müller-Boré & Partner Patentanwälte PartG mbB
(86) International application number: PCT/JP2024/036735
(87) International publication number: WO 2025/084294

(57) **Abstract**

A process plan creation device capable of accurately creating a process plan of pipeline construction in accordance with various work progress patterns. A process plan creation device 1 creates a process plan of pipeline construction. The process plan creation device 1 includes: a data storage 14 that stores basic data for use in creating the process plan; an information acquirer 11 that acquires information concerning a work progress pattern in the pipeline construction and construction information necessary for creating the process plan; a work time calculator 12 that calculates a work time in accordance with the work progress pattern using the basic data stored in the data storage 14 and the information acquired by the information acquirer 11; and a process plan creator 13 that creates the process plan based on the work time calculated by the work time calculator 12.

## Description

### TECHNICAL FIELD

The present teaching relates to a process plan creation device, system, method, and program for pipeline construction.

### BACKGROUND ART

In general, in pipeline construction such as water pipe construction, a process plan is created and work proceeds according to the created process plan. As a process plan creation system for pipeline construction, Patent Document 1, for example, discloses a known process plan creation system for water pipe construction including: an information acquirer that acquires water pipe-related information; a process time calculator that calculates a process time based on the water pipe-related information; and a process plan creator that creates a process plan of water pipe construction by using the process time.

Patent Document 1 discloses that water pipe construction-related information including information related to on-site conditions is used in calculating the process time. Patent Document 1 also discloses that the information related to the on-site conditions includes information related to parallel work, and information related to parallel use of work machines.

### CITATION LIST

### PATENT DOCUMENTS

Patent Document 1: Japanese Patent Application Publication No. 2023-094996

### SUMMARY OF INVENTION

### TECHNICAL PROBLEM

As described above, Patent Document 1 discloses that the information related to the on-site conditions includes information related to parallel work and information related to parallel use of work machines. However, Patent Document 1 fails to disclose a specific technique of how to reflect parallel work performed at the site of actual pipeline construction on creation of a process plan.

At the site of pipeline construction, work progresses in various patterns including parallel work. The progress of the pipeline construction greatly differs depending on the pattern of the work progress. Therefore, it is required to accurately create a process plan of pipeline construction in accordance with various work progress patterns.

It is therefore an object of the present teaching to provide a process plan creation device capable of accurately creating a process plan of pipeline construction in accordance with various work progress patterns.

### SOLUTION TO PROBLEM

A process plan creation device for pipeline construction according to one embodiment of the present teaching is a device that creates a process plan of pipeline construction. The process plan creation device includes: a data storage that stores basic data for use in creating the process plan; an information acquirer that acquires information concerning a work progress pattern in the pipeline construction and construction information necessary for creating the process plan; a work time calculator that calculates a work time in accordance with the work progress pattern using the basic data stored in the data storage and the information acquired by the information acquirer; and a process plan creator that creates the process plan based on the work time calculated by the work time calculator (first configuration).

This makes it possible to calculate a work time in accordance with the work progress pattern in pipeline construction to create a process plan in accordance with the work progress pattern. Examples of the work progress pattern include a single work pattern in which the processes of excavation, pipe installation, and backfilling are performed sequentially by a single team, a partial parallel work pattern in which some of the processes are performed in parallel by a plurality of teams while the other processes are performed by all the workers, and a parallel work pattern in which all the processes are performed in parallel by a plurality of teams.

The configuration described above makes it possible to create a process plan in accordance with the single work pattern, the partial parallel work pattern, and the parallel work pattern, and thus, the process plan can be accurately created. In addition, the process plan can be easily created using the basic data stored in the data storage, as well as the information concerning the work progress pattern and the construction information necessary for creating the process plan, which are acquired by the information acquirer.

In the first configuration, the basic data stored in the data storage includes data concerning a reference work time of each process in the pipeline construction. The work time calculator calculates the work time of each process in accordance with the work progress pattern using the data concerning the reference work time (second configuration).

This enables easy calculation of the work time in each process of the pipeline construction. Accordingly, the work time in accordance with the work progress pattern can also be easily calculated.

In the second configuration, the work time calculator creates a plurality of work times in accordance with the work progress pattern using the data concerning the reference work time. The process plan creator creates the process plan using a longest work time in the plurality of work times calculated by the work time calculator (third configuration).

This prevents the work time calculated by the process plan creation device from becoming shorter than the work time in the actual water pipe construction. Accordingly, it is possible to create a process plan of pipeline construction that can be executed with a margin with respect to the progress of the actual pipeline construction.

In the first configuration, the work time calculator increases the number of pipes to be subjected to the pipeline construction within a predetermined period and calculates the work time of each number of pipes. If a total of the work times calculated by the work time calculator exceeds a predetermined value, the process plan creator creates the process plan based on a work time in a case where the number of pipes to be subjected to the pipeline construction within the predetermined period is reduced by one (fourth configuration).

Accordingly, it is possible to easily calculate a process period in accordance with the number of water pipes that can be installed within a predetermined period (e.g., one day). Thus, the process plan can be more accurately created.

In any one of the first through fourth configuration, the work progress pattern includes a work pattern in which an excavation process, a pipe installation process, and a backfilling process in the pipeline construction are performed independently of each other or at least some of the excavation process, the pipe installation process, and the backfilling process are performed in parallel (fifth configuration).

Accordingly, it is possible to calculate a work time in consideration of the work progress patterns in the excavation, pipe installation, and backfilling processes of the pipeline construction to create the process plan. Thus, the process plan can be more accurately created.

A process plan creation system for pipeline construction according to one embodiment of the present teaching is a system that creates a process plan of pipeline construction, and includes: an input terminal; and a server capable of communicating with the input terminal. The input terminal includes an inputter that inputs information concerning a work progress pattern in the pipeline construction and construction information necessary for creating the process plan, and a terminal-side communicator capable of transmitting the information input to the inputter to the server. The server includes a server-side communicator that receives the information transmitted from the terminal-side communicator, a data storage that stores basic data for use in creating the process plan and stores the information received by the server-side communicator, a work time calculator that calculates a work time in accordance with the work progress pattern using the basic data and the information stored in the data storage, and a process plan creator that creates the process plan based on the work time calculated by the work time calculator (sixth configuration).

This makes it possible to realize a system capable of calculating a work time in accordance with a work progress pattern in a pipe construction and creating a process plan in accordance with the work progress pattern. This system can more accurately create the process plan. In addition, the system can easily create the process plan using the basic data stored in the data storage, as well as the information concerning the work progress pattern and the construction information necessary for creating the process plan, which are acquired by the information acquirer.

A process plan creation method for pipeline construction according to one embodiment of the present teaching is a method for creating a process plan of pipeline construction by the process plan creation device described above. The process plan creation method includes: a data acquisition step of causing a work time calculator of the process plan creation device to acquire basic data for use in creating the process plan from a data storage of the process plan creation device; an information acquisition step of causing an information acquirer of the process plan creation device to acquire information concerning a work progress pattern in the pipeline construction and construction information necessary for creating the process plan; a work time calculation step of causing the work time calculator to calculate a work time in accordance with the work progress pattern using the basic data acquired in the data acquisition step and the information acquired in the information acquisition step; and a process plan creation step of causing a process plan creator of the process plan creation device to create the process plan based on the work time calculated in the work time calculation step (first method).

This makes it possible to realize a method capable of calculating a work time in accordance with a work progress pattern in a pipe construction and creating a process plan in accordance with the work progress pattern. With this method, the process plan can be accurately created. In addition, this method can easily create the process plan using the basic data acquired in the data acquisition step, as well as the information concerning the work progress pattern and the construction information necessary for creating the process plan, which are acquired in the information acquisition step.

A program for creating a process plan of pipeline construction according to one embodiment of the present teaching causes a computer to: acquire basic data for use in creating the process plan from a data storage; acquire information concerning a work progress pattern in the pipeline construction and construction information necessary for creating the process plan; calculate a work time in accordance with the work progress pattern using the basic data and the acquired information; and create the process plan based on the calculated work time (first program).

This makes it possible to realize a program capable of calculating a work time in accordance with a work progress pattern in a pipe construction and creating a process plan in accordance with the work progress pattern. By executing this program, the process plan can be accurately created. In addition, the program enables easy creation of the process plan using the basic data, the information concerning the work progress pattern, and the construction information necessary for creating the process plan.

### ADVANTAGEOUS EFFECTS OF INVENTION

The process plan creation device for pipeline construction according to one embodiment of the present teaching acquires information on the work progress pattern in pipeline construction and the construction information necessary for creating the process plan, calculates a work time in accordance with the work progress pattern using the basic information stored in the data storage and the information acquired by the information acquirer, and creates the process plan based on the work time.

This makes it possible to calculate the work time in accordance with the work progress pattern in the pipeline construction to create the process plan in accordance with the work progress pattern. Accordingly, the process plan creation device is capable of accurately creating the process plan of the pipeline construction in accordance with various work progress patterns.

### BRIEF DESCRIPTION OF DRAWINGS

[FIG. 1] FIG. 1 is a functional block diagram showing a schematic configuration of a process plan creation device according to a first embodiment.
[FIG. 2] FIG. 2 is a diagram illustrating an example of an output of a process plan.
[FIG. 3] FIG. 3 is a table showing an example of a time table of processes in an independent work pattern.
[FIG. 4] FIG. 4 is a table showing an example of a time table of processes in a partial parallel work pattern.
[FIG. 5] FIG. 5 is a table showing an example of a time table of processes in a full parallel work pattern.
[FIG. 6] FIG. 6 is a table showing an example of a time table in a case where a work time of a pipe installation process of a first water pipe is longer than a work time of an excavation process of a second water pipe, in the partial parallel work pattern shown in FIG. 4.
[FIG. 7] FIG. 7 is a table showing an example of a time table in a case where three water pipes are laid in the partial parallel work pattern (in which an excavation process and a pipe installation process are performed in parallel).
[FIG. 8] FIG. 8 is a flowchart showing an example of a process plan creation method.
[FIG. 9] FIG. 9 is a functional block diagram illustrating a schematic configuration of a process plan creation system according to a second embodiment.

### DESCRIPTION OF EMBODIMENTS

Embodiments will be described hereinafter with reference to the drawings. In the drawings, the same parts are denoted by the same reference characters, and description thereof will not be repeated. The dimensions of components in the drawings do not strictly represent actual dimensions of the components and dimensional proportions of the components.

In the following description, expressions such as "fixed," "connected," and "attached" (hereinafter referred to as "fixed or the like") include not only a case where members are directly fixed or the like but also a case where the members are fixed or the like through other members. That is, in the following description, the expression such as "fixed or the like" includes meanings of direct and indirect fixing or the like between members.

### [FIRST EMBODIMENT]

### (Process Plan Creation Device for Pipeline Construction)

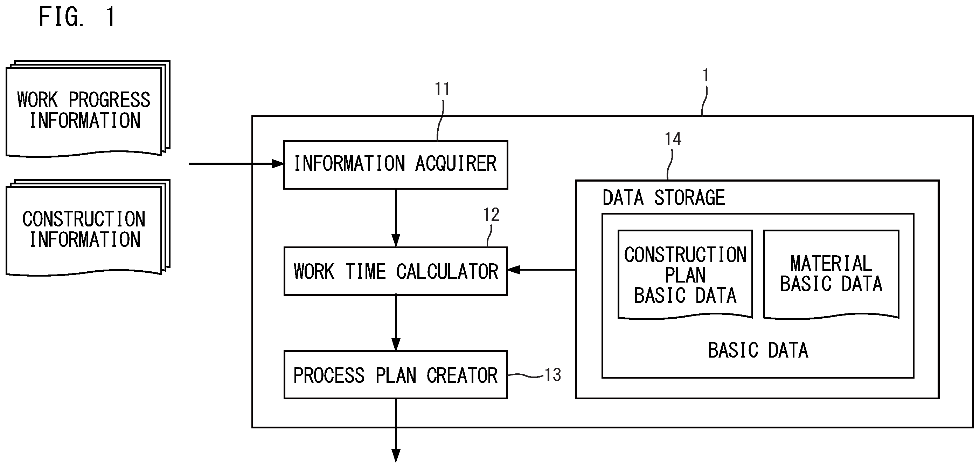

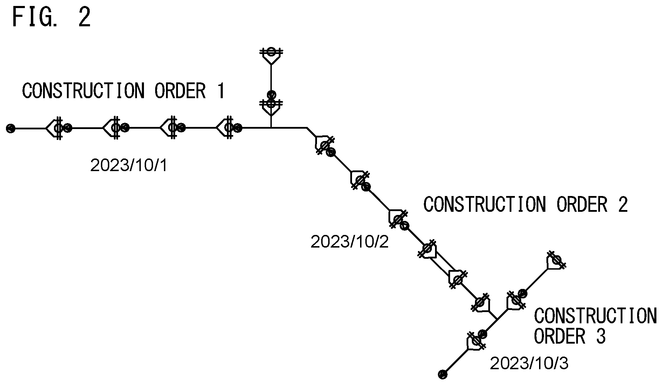

FIG. 1 is a functional block diagram illustrating a schematic configuration of a process plan creation device 1 according a first embodiment of the present teaching. The process plan creation device 1 creates a process plan of pipeline construction and outputs the process plan, as illustrated in FIG. 2, for example. FIG. 2 is a diagram illustrating an example of an output of the process plan. For, example, the process plan output from the process plan creation device 1 may be displayed using numerical values, characters, and/or the like, and/or may be displayed using graphs and/or charts. The process plan creation device 1 may output only data as the process plan.

Examples of the pipeline construction include construction for forming pipelines, such as water pipe construction, underwater pipe construction, and agricultural water pipe construction. The following description will be directed to the case of water pipe construction, but is also similarly applicable to construction of other pipelines.

The process plan creation device 1 may be implemented by a computer device capable of executing a program, or may be implemented by a dedicated device, for example.

The process plan creation device 1 includes an information acquirer 11, a work time calculator 12, a process plan creator 13, and a data storage 14.

The information acquirer 11 acquires a part of information necessary for a process plan. Specifically, the information acquirer 11 acquires work progress information that is information concerning a work progress pattern in water pipe construction and construction information necessary for creating a process plan.

The work progress pattern refers to a pattern in which work of each process progresses in performing construction of a plurality of water pipes. Specifically, examples of the work progress pattern include a full parallel work pattern in which works of processes are performed in parallel, a partial parallel work pattern in which some of the works of the processes are performed in parallel, and an independent work pattern in which the works of the processes are performed independently of each other. The work progress pattern also includes a pattern in which the lengths of the work times of the processes are different in the full parallel work pattern, the partial parallel work pattern, and the independent work pattern.

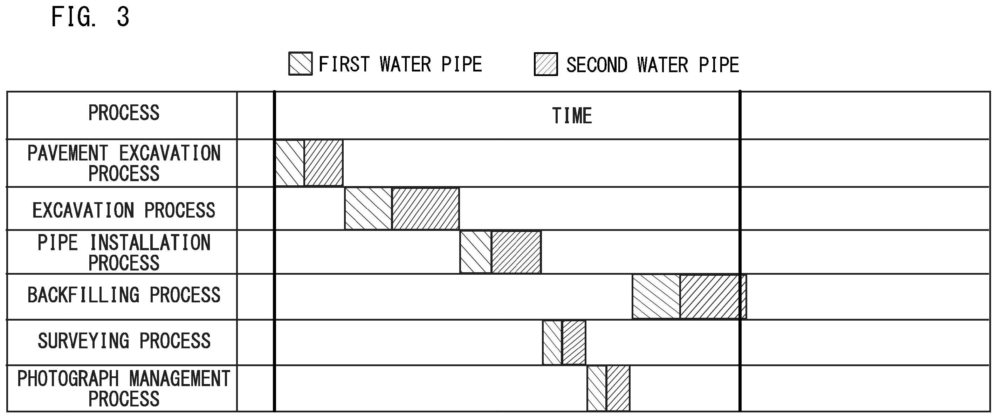

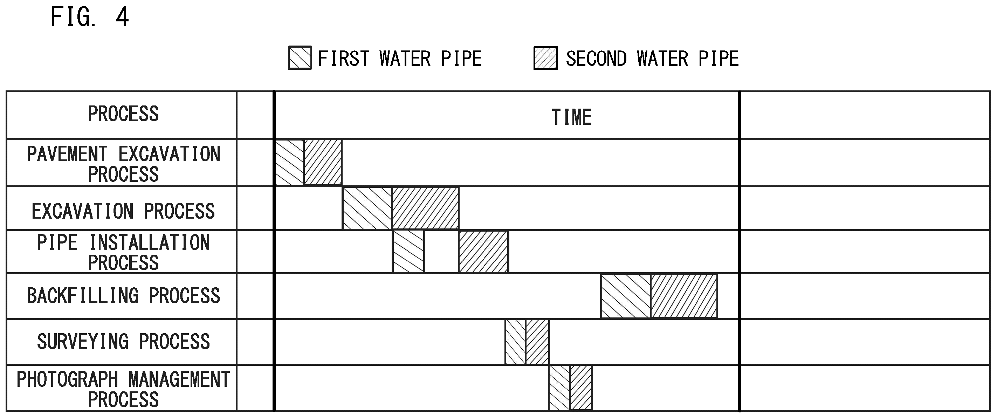

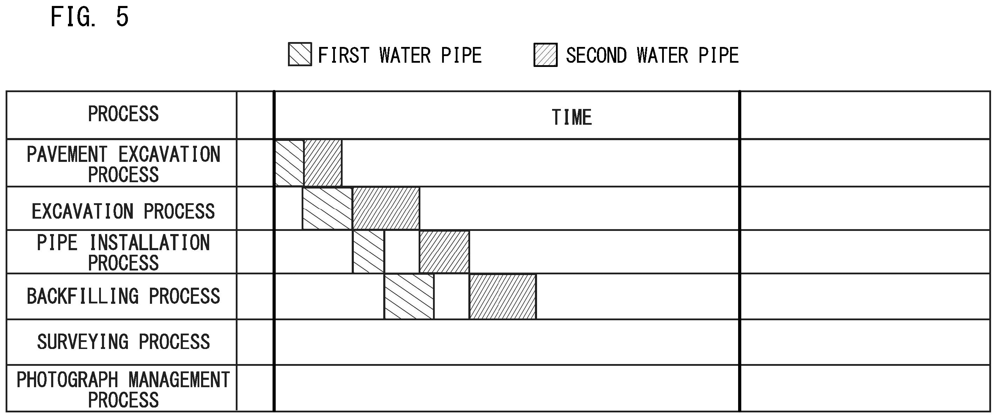

Examples of the work patterns are shown in FIGS. 3 through 5. FIG. 3 is a table showing an example of a time table of processes in the independent work pattern. FIG. 4 is a table showing an example of a time table of processes in the partial parallel work pattern. FIG. 5 is a table showing an example of a time table of processes in the full parallel work pattern. Each of FIGS. 3 through 5 shows a time table in the case of construction in which two water pipes are laid underground beneath a paved road.

First, processes shown in FIGS. 3 through 5 will be described. Examples of the processes of the water pipe construction include a pavement excavation process, an excavation process, a pipe installation process, a backfilling process, a surveying process, and a photograph management process. The pavement excavation process is the process of excavating a pavement slab of a road or the like. The excavation process is the process of excavating the ground to form a trench so that water pipes can be laid in the ground. The pipe installation process is the process of joining water pipes to each other after the water pipes are carried into the trench. The backfilling process is the process of backfilling the trench with the water pipes joined therein and paving the road surface to return the surface to the original paved road. The surveying process is the process of measuring various dimensions and the like after the water pipes are installed. The photograph management process is the process of photographing and managing the installation state of the water pipes.

As shown in FIG. 3, in the independent work pattern, in the case of laying a plurality of water pipes, a range where the plurality of water pipes can be laid is excavated in each of the pavement excavation process and the excavation process. That is, in the pavement excavation process, first, the pavement slab in the range where the plurality of water pipes can be laid is excavated. After the pavement excavation process is completed, in the excavation process, the ground in the range where the plurality of water pipes can be laid is excavated to form a trench. Thereafter, in the pipe installation process, the plurality of water pipes are carried into the trench and joined to each other. In this state, dimensional measurements and the like are performed on the plurality of water pipes in the surveying process and photographs are taken in the photograph management process. Then, in the backfilling process, the area around each of the water pipes is backfilled and the surface is paved.

In this manner, in the independent work pattern shown in FIG. 3, the processes are sequentially performed without overlapping each other. That is, in the independent work pattern, all the workers in one team perform each process.

In the partial parallel work pattern shown in FIG. 4, in the case of laying a plurality of water pipes, a range where the plurality of water pipes can be laid is excavated in each of the pavement excavation process and the excavation process. In the excavation process, when excavation of the trench in the range where the first water pipe can be laid is completed, while excavation for laying the second water pipe is being carried out, workers from another team perform piping work for the first water pipe in the trench. That is, the timing of the excavation process for laying the second water pipe overlaps the timing of the pipe installation process for performing piping work on the first water pipe. The piping work of the second water pipe is performed after excavation of the trench in the range where the second water pipe can be laid is completed in the excavation process. In the example shown in FIG. 4, the subsequent processes are the same as those shown in the example in FIG. 3.

In the full parallel work pattern shown in FIG. 5, in the case of laying a plurality of water pipes, after excavating the pavement slab in the range where the first water pipe can be laid in the pavement excavation process, while excavation of the pavement slab for laying the second water pipe is being carried out, workers from another team excavate the ground in the range where the first water pipe can be laid in the excavation process. That is, the timing of the pavement excavation process for laying the second water pipe overlaps the timing of the excavation process for laying the first water pipe. The excavation process for laying the second water pipe is performed after excavation of the pavement slab in the range where the second water pipe can be laid is completed in the pavement excavation process.

After excavating the ground in the range where the first water pipe can be laid to form the trench in the excavation process, as the pipe installation process, piping work is performed to carry the first water pipe into the trench and join the first water pipe with other water pipes. At this time, the work of excavating the ground in the range where the second water pipe can be laid is also being carried out simultaneously. That is, the timing of the evacuation process for laying the second water pipe overlaps the timing of the pipe installation process for laying the first water pipe. The pipe installation process for laying the second water pipe is performed after excavation of the ground in the range where the second water pipe can be laid is completed in the excavation process.

After laying the first water pipe in the trench in the pipe installation process, as the backfilling process, the area around the first water pipe is backfilled. At this time, the work of laying the second water pipe in the trench formed in the excavation process is also being carried out simultaneously. That is, the timing of the pipe installation process for laying the second water pipe overlaps the timing of the backfilling process for backfilling around the first water pipe. The backfilling process for backfilling around the second water pipe is performed after the second water pipe is laid in the trench in the pipe installation process.

In this manner, in the partial parallel work pattern shown in FIG. 4 and the full parallel work pattern shown in FIG. 5, the timings of at least some of the processes overlap. That is, in the partial parallel work pattern and the full parallel work pattern, workers from a plurality of teams perform at least some processes simultaneously.

In the example shown in FIG. 5, for simplification of description, the work in the case excluding the surveying process and the photograph management process has been described. The full parallel work pattern shown in FIG. 5 may include the surveying process and the photograph management process.

The work progress information includes information such as which work progress pattern a worker who creates the process plan has selected among the work progress patterns described above.

The construction information includes information concerning design and environments of the water pipe construction in information necessary for creating the process plan. Specifically, the construction information includes construction design information and environment information.

The construction design information includes information obtained from design of water pipe construction. Specifically, examples of the construction design information include design information of, for example, the width and depth of a trench to be excavated, the configuration of a pavement slab (the thickness of each layer constituting the pavement slab), and the type, size, and length of water pipes. The construction design information is obtained based on a designed pipeline diagram.

The environment information includes information concerning environments of a place where the water pipe construction is carried out and information concerning site conditions, such as the number of workers and work machines to be used. Specifically, examples of the environment information include information concerning underground conditions, such as soil and ground water of the place where water pipes are laid, information concerning underground installations such as pipes that cross underground, information concerning the number of workers, and information concerning the number of vehicles for transporting soil and work machines.

The data storage 14 stores basic data for use in creating a process plan. The basic data includes construction plan basic data and material basic data.

The construction plan basic data includes basic data concerning work times in accordance with a work content for each work. Specifically, examples of the construction plan basic data include data concerning a work time in accordance with, for example, the depth of excavation, data concerning a work time of piping in accordance with, for example, the type and length of water pipes, and data concerning a work time of backfilling in accordance with the size of water pipes. The work time is a reference work time per unit work amount, which is a reference unit of the work amount. The work time may be a reference work time, may be a work time that differs for each region, or may vary depending on the number of construction workers and characteristics of the construction workers.

The material basic data includes data concerning water pipes and pipe components. Specifically, the material basic data include information of, for example, the type, size, and length of the water pipes and data of, for example, the type of a valve plug that is the pipe component.

The work time calculator 12 calculates a work time of each type of work in each process based on the work progress information and the construction information acquired by the information acquirer 11 and the basic data stored in the data storage 14. Specifically, the work time calculator 12 uses the construction information and the basic data to determine a work amount expected for each type of work in each process, and multiplies the calculated work amount by the work time per unit work amount to calculate the work time of each type of work. The work time calculator 12 determines a work amount of excavation from a result obtained by multiplying the width of excavation and the length of water pipes, and obtains a work time of excavation by multiplying the work amount by a work time per unit work amount of excavation. The construction type refers to the type of work carried out in each process. Examples of the work type include pavement slab demolition and loading work of demolition and loading of a pavement slab, and pipe laying work.

The work time calculator 12 calculates the work time as described above for each type of work, in accordance with a work progress pattern in the work progress information. The work time calculator 12 outputs the work time of each type of work in accordance with the work progress pattern.

The process plan creator 13 creates a process plan using the work time calculated by the work time calculator 12. Specifically, the process plan creator 13 creates a process plan of water pipe construction by accumulating the work times obtained for the individual work types in accordance with the work progress pattern in the work progress information.

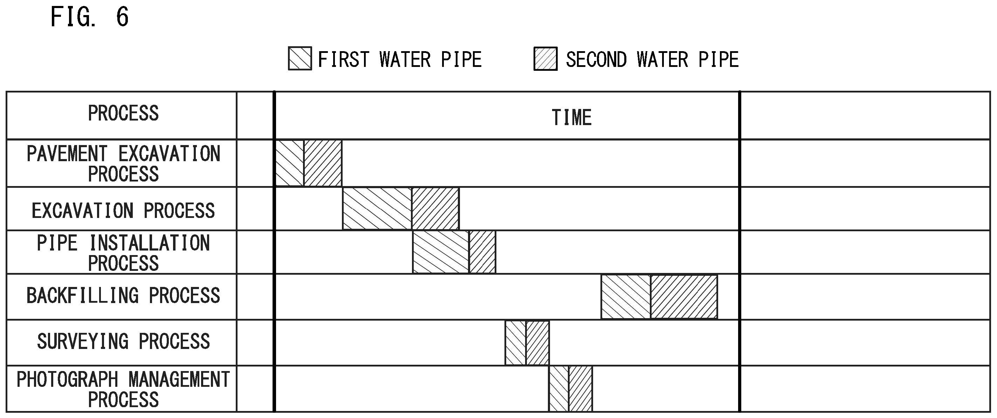

In the case of laying a plurality of water pipes in the partial parallel work pattern or the full parallel work pattern, the process plan creator 13 creates a process plan by categorizing cases based on which of the work time of the process concerning the N-the water pipe and the work time of the process concerning the N-1-th water pipe that occurs at the timing overlapping the process concerning the N-to water pipe is longer. For example, the process plan creator 13 creates a process plan by categorizing cases based on which of the time of the excavation process for laying the N-tph water pipe and the time of the pipe installation process of the N-1-th water pipe is longer. FIG. 6 is a table showing an example of a time table in a case where a work time of a pipe installation process of a first water pipe is longer than a work time of an excavation process of a second water pipe, in the partial parallel work pattern shown in FIG. 4.

In this manner, the process plan creation device 1 categorizes work progress patterns in the case where the timings of the processes overlap, and also categorizes work progress patterns based on the lengths of the work times of the processes. As a result, it is possible to realize the process plan creation device 1 capable of creating a process plan in accordance with various work progress patterns performed at the site of water pipe construction.

In the case of laying a plurality of water pipes in the partial parallel work pattern or the full parallel work pattern as described above, the process plan creator 13 determines whether a total work time (the work time of laying N water pipes) in the created process plan is within a reference time.

If the total work time is within the reference time, the process plan creator 13 increases the number of water pipes to be laid by one and has the work time calculator 12 calculate a laying work time, and determines a total work time of (N+1) pipes using the result. If the total work time is not within the reference time, the process plan creator 13 creates and outputs a process plan for laying (N-1) water pipes, where the number of the (N-1) water pipes is smaller by one than the N water pipes for which the total work time is obtained. In this manner, it is possible to create a process plan for laying the maximum number of water pipes that can be laid within the reference time.

The reference time may be, for example, a time in which work can be performed in one day, may be a portion of a work time in work of one day, or may be a time in which work can be performed in a predetermined period longer than one day.

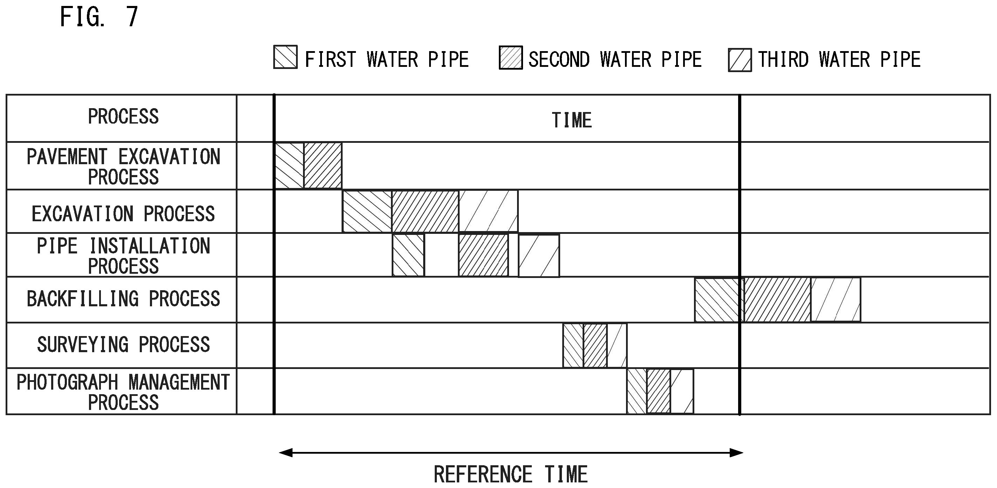

FIG. 7 is a table showing an example of a time table in a case where three water pipes are laid in the partial parallel work pattern (in which an excavation process and a pipe installation process are performed in parallel). As shown in FIG. 7, when three water pipes are laid in the partial parallel work pattern, the work time exceeds the reference time (the range indicated by the bold line in FIG. 7). In this case, the process plan creator 13 creates a process plan in accordance with a time table for laying two water pipes as shown in FIG. 4, for example.

The process plan creation device 1 according to this embodiment is a device that creates a process plan of water pipe construction. The process plan creation device 1 includes: the data storage 14 that stores basic data for use in creating the process plan; the information acquirer 11 that acquires information concerning a work progress pattern in the water pipe construction and construction information necessary for creating the process plan; the work time calculator 12 that calculates a work time in accordance with the work progress pattern using the basic data stored in the data storage 14 and the information acquired by the information acquirer 11; and the process plan creator 13 that creates the process plan based on the work time calculated by the work time calculator 12.

This makes it possible to calculate a work time in accordance with the work progress patterns in water pipe construction to create the process plan in accordance with the work progress patterns. Examples of the work progress pattern include a single work pattern in which the processes of excavation, pipe installation, and backfilling are performed sequentially by a single team, a partial parallel work pattern in which the processes of excavation and pipe installation are performed in parallel by a plurality of teams while backfilling is performed by all the workers, and a parallel work pattern in which all the processes are performed in parallel by a plurality of teams.

The configuration described above makes it possible to create the process plan in accordance with the single work pattern, the partial parallel work pattern, and the parallel work pattern, and thus, the process plan can be accurately created. In addition, the process plan can be easily created using the basic data stored in the data storage 14, as well as the information concerning the work progress pattern and the construction information necessary for creating the process plan, which are acquired by the information acquirer 11.

In this embodiment, the basic data stored in data storage 14 includes data concerning a reference work time of each process in the water pipe construction. The work time calculator 12 calculates the work time of each process in accordance with the work progress pattern using data concerning the reference work time.

This enables easy calculation of the work time in each process of the water pipe construction. Accordingly, the work time in accordance with the work progress pattern can also be easily calculated.

In this embodiment, the work time calculator 12 calculates a plurality of work times in accordance with the work progress pattern using the data concerning the reference work time. The process plan creator 13 creates the process plan using a longest work time in the plurality of work times calculated by the work time calculator 12.

This prevents the work time calculated by the process plan creation device 1 from becoming shorter than the work time in the actual water pipe construction. Accordingly, it is possible to create a process plan of water pipe construction that can be executed with a margin with respect to the progress of the actual water pipe construction.

In this embodiment, the work time calculator 12 increases the number of pipes to be subjected to the water pipe construction within a predetermined period and calculates the work time for each of the water pipes. If a total of the work times calculated by the work time calculator 12 exceeds a predetermined value, the process plan creator 13 creates the process plan based on a work time in a case where the number of water pipes to be subjected to the water pipe construction within the predetermined period is reduced by one.

Accordingly, it is possible to easily calculate a process period in accordance with the number of water pipes that can be installed within a predetermined period (e.g., one day). Thus, the process plan can be more accurately created.

In this embodiment, the work progress pattern includes a work pattern in which an evacuation process, a pipe installation process, and a backfilling process in the pipeline construction are performed independently of each other or at least some of the evacuation process, the pipe installation process, and the backfilling process are performed in parallel.

Accordingly, it is possible to calculate a work time in consideration of the work progress patterns in the excavation, pipe installation, and backfilling processes of the pipeline construction to create the process plan. Thus, the process plan can be more accurately created.

### (Process Plan Calculation Method)

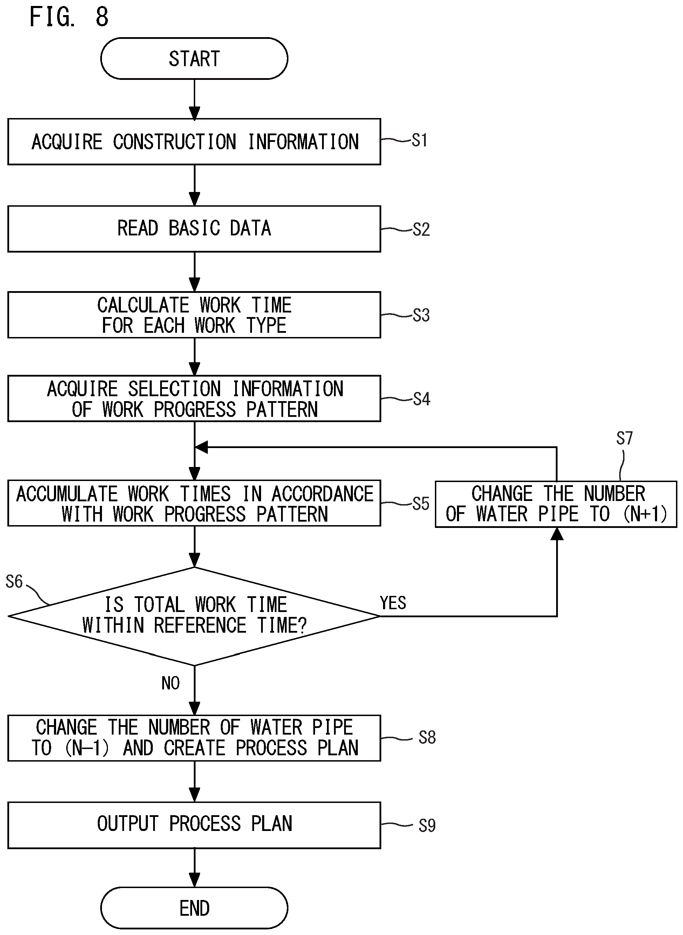

A process plan creation method performed by the process plan creation device 1 with the configuration described above will now be described with reference to FIG. 8. FIG. 8 is a flowchart showing an example of the process plan creation method.

When the flow shown in FIG. 8 starts, first, the information acquirer 11 of the process plan creation device 1 acquires construction information (step S1). The information acquirer 11 outputs the acquired construction information to the work time calculator 12. The information acquirer 11 may acquire the construction information from an unillustrated design device or may acquire the construction information based on an input operation to an unillustrated input device.

Next, the work time calculator 12 reads basic data from the data storage 14 (step S2). The basic data includes construction plan basic data and material basic data. In subsequent step S3, the work time calculator 12 calculates a work time of each type of work using the construction information and the basic data.

Thereafter, in step S4, the information acquirer 11 acquires information in which a work progress pattern is selected. The selection of the work pattern may be performed by input work by a worker or may be included in the construction information beforehand, for example. Examples of the work progress pattern include a full parallel work pattern, a partial parallel work pattern, and an independent work pattern. The work progress pattern also includes a pattern in which the lengths of the work times of the processes are different in the full parallel work pattern, the partial parallel work pattern, and the independent work pattern.

The process plan creator 13 accumulates work times calculated by the work time calculator 12 in accordance with the selected work progress pattern (step S5). At this time, the process plan creator 13 creates a process plan by accumulating work times in the case of laying a single water pipe.

In subsequent step S6, the process plan creator 13 determines whether the accumulated total work time is within a reference time or not. If the total work time is within the reference time (YES in step S6), the process proceeds to step S7, and one is added to the number of water pipes to be laid to make the number two. Then, in step S5, the work time calculator 12 calculates a work time of each process in the case of laying two water pipes, and the process plan creator 13 obtains a total work time by accumulating work times in accordance with the selected work progress pattern. The flow of steps S6, S7, and S5 is performed until it is determined that the total work time exceeds the reference time in step S6 (NO in step S6).

If it is determined that the total work time exceeds the reference time in step S6 (NO in step S6), the process proceeds to step S8, and the process plan creator 13 creates a process plan by reducing the number of water pipes to be laid by one. Thereafter, in step S9, the created process plan is output, and this flow ends (END).

Here, step S2 corresponds to a data acquisition step, steps S1 and S4 correspond to an information acquisition step, steps S3 and S5 correspond to a work time calculation step, and step S8 corresponds to a process plan creation step.

A process plan creation method according to this embodiment is a method for creating a process plan of water pipe construction by the process plan creation device 1. The process plan creation method includes: a data acquisition step (step S2) of causing the work time calculator 12 of the process plan creation device 1 to acquire basic data for use in creating the process plan from the data storage 14 of the process plan creation device 1; an information acquisition step (steps S1 and S4) of causing the information acquirer 11 of the process plan creation device 1 to acquire information concerning a work progress pattern in the water pipe construction and construction information necessary for creating the process plan; a work time calculation step (steps S3 and S5) of causing the work time calculator 12 to calculate a work time in accordance with the work progress pattern using the basic data acquired in the data acquisition step and the information acquired in the information acquisition step; and a process plan creation step (step S8) of causing the process plan creator 13 of the process plan creation device 1 to create the process plan based on the work time calculated in the work time calculation step.

This makes it possible to obtain a method capable of calculating a work time in accordance with the work progress pattern in water pipe construction and creating a process plan based on the work progress pattern. With this method, the process plan can be accurately created. In addition, this method can easily create the process plan using the basic data acquired in the data acquisition step, and the information concerning the work progress pattern and the construction information necessary for creating the process plan acquired in the information acquisition step.

### (Program for Creating Process Plan)

A program according to an embodiment of the present teaching only needs to be a program that causes a computer constituting the process plan creation device 1 to perform steps S1 through S9 shown in FIG. 8. This program is executed by the computer of the process plan creation device 1 so that the process plan creation device 1 and the process plan creation method according to this embodiment can be obtained. In this case, the computer constituting the process plan creation device 1 may be a general-purpose computer or a dedicated computer. The computer incorporates a central processing unit (CPU), for example, and performs calculation by the CPU.

In this embodiment, data acquired by the process plan creation device 1 and a computation result obtained by the process plan creation device 1 are stored in the data storage 14. In the case of performing computation using the data stored in the data storage 14, the process plan creation device 1 reads the data stored and performs computation. The data storage 14 is constituted by a storage medium including a memory device such as a memory or a hard disk.

A program for creating a process plan of water pipe construction according to this embodiment is a program for creating a process plan of water pipe construction. This program causes a computer to: acquire basic data for use in creating the process plan from the data storage 14; acquire information concerning a work progress pattern in the water pipe construction and construction information necessary for creating the process plan; calculate a work time in accordance with the work progress pattern using the basic data and the acquired information; and create the process plan based on the calculated work time.

This makes it possible to realize a program capable of calculating a work time in accordance with a work progress pattern in pipe construction and creating a process plan in accordance with the work progress pattern. By executing this program, the process plan can be accurately created. In addition, the program enables easy creation of the process plan using the basic data, the information concerning the work progress pattern, and the construction information necessary for creating the process plan.

### [SECOND EMBODIMENT]

### (Process Plan Creation System for Water Pipe Construction)

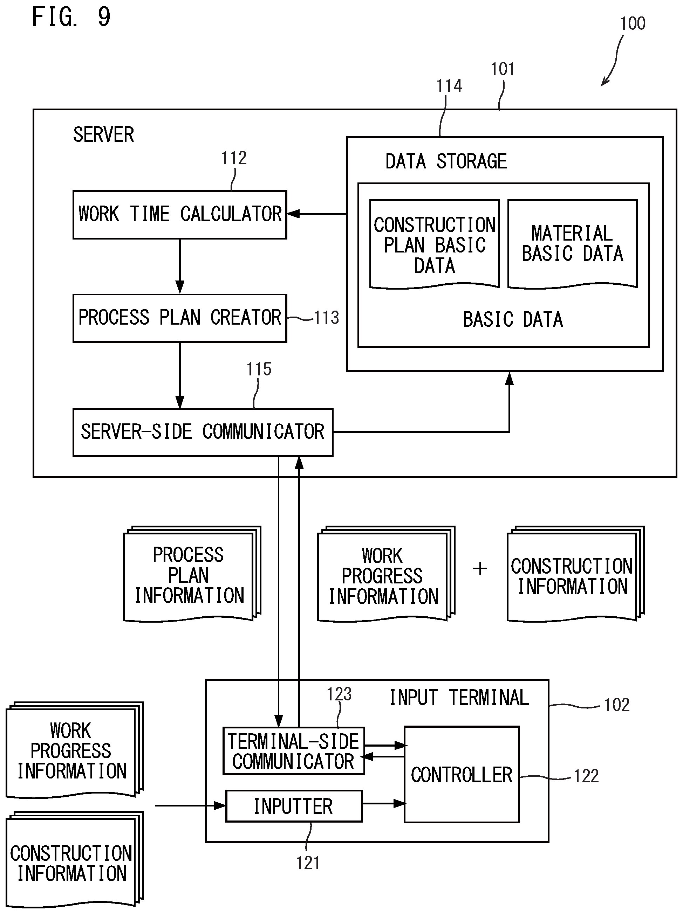

FIG. 9 is a functional block diagram illustrating a schematic configuration of a process plan creation system 100 according to a second embodiment of the present teaching. The process plan creation system 100 creates and outputs a process plan of water pipe construction. The process plan creation system 100 includes a server 101 and an input terminal 102.

The server 101 is configured to communicate with the input terminal 102 and creates a process plan based on information input to the input terminal 102. Specifically, the server 101 includes a work time calculator 112, a process plan creator 113, a data storage 114, and a server-side communicator 115. The work time calculator 112 and the process plan creator 113 have the same functions as the work time calculator 12 and the process plan creator 13 in the first embodiment, respectively, and thus, detailed description thereof will be omitted.

The data storage 114 stores basic data similar to that of the first embodiment and also stores information acquired from a terminal-side communicator 123 of the input terminal 102 via the server-side communicator 115. Examples of the information include work progress information and construction information.

The server-side communicator 115 is configured to transmit and receive information to/from the terminal-side communicator 123 of the input terminal 102. Specifically, the server-side communicator 115 receives the work progress information and the construction information form the terminal-side communicator 123 of the input terminal 102, and transmits process plan information concerning the process plan to the terminal-side communicator 123 of the input terminal 102.

The input terminal 102 includes an inputter 121, a controller 122, and the terminal-side communicator 123. The inputter 121 acquires information by an input operation by an operator. The inputter 121 may be, for example, a device that allows input operation such as a keyboard, a device that acquires information stored in a medium or the like, or a device that acquires information from the outside via communication, for example. The information acquired by the inputter 121 is input to the controller 122. The inputter 121 may have any configuration as long as the inputter 121 is capable of inputting information to the controller 122 of the input terminal 102.

The controller 122 transmits the information input to the inputter 121 to the server-side communicator 115 of the server 101 via the terminal-side communicator 123. In addition, the controller 122 processes the information transmitted from the server-side communicator 115 to the terminal-side communicator 123. The controller 122 may output the information received by the terminal-side communicator 123 to an unillustrated output device, for example.

The terminal-side communicator 123 is configured to transmit and receive information to/from the server-side communicator 115 of the server 101. Specifically, the terminal-side communicator 123 transmits work progress information and construction information to the server-side communicator 115 of the server 101, while receiving process plan information concerning the process plan from the server-side communicator 115 of the server 101.

In the manner described above, the process plan creation system 100 for water pipe construction according to this embodiment includes the input terminal 102 and the server 101 capable of communicating with the input terminal 102, and creates a process plan of water pipe construction. The input terminal 102 includes the inputter 121 that inputs information concerning a work progress pattern in the water pipe construction and construction information necessary for creating the process plan, and the terminal-side communicator 123 capable of transmitting the information input to the inputter 121 to the server 101. The server 101 includes the server-side communicator 115 that receives the information transmitted from the terminal-side communicator 123, the data storage 114 that stores basic data for use in creating the process plan and stores the information received by the server-side communicator 115, the work time calculator 112 that calculates a work time in accordance with the work progress pattern using the basic data and the information stored in the data storage 114, and the process plan creator 113 that creates the process plan based on the work time calculated by the work time calculator 112.

This makes it possible to calculate a work time in accordance with the work progress patterns in water pipe construction to create the process plan in accordance with the work progress patterns. Examples of the work progress pattern include a single work pattern in which the processes of excavation, pipe installation, and backfilling are performed sequentially by a single team, a partial parallel work pattern in which the processes of excavation and pipe installation are performed in parallel by a plurality of teams while backfilling is performed by all the workers, and a parallel work pattern in which all the processes are performed in parallel by a plurality of teams.

The configuration described above makes it possible to create a process plan in accordance with the single work pattern, the partial parallel work pattern, and the parallel work pattern, and thus, the process plan can be accurately created. In addition, the process plan can be easily created using the basic data stored in the data storage 114, the information concerning the work progress pattern, and the construction information necessary for creating the process plan.

In this embodiment, the basic data stored in the data storage 114 includes data concerning the reference work time of each process in the water pipe construction. The work time calculator 112 calculates the work time of each process in accordance with the work progress pattern using the data concerning the reference work time.

This enables easy calculation of a work time in each process of the water pipe construction. Accordingly, the work time in accordance with the work progress pattern can also be easily calculated.

### (OTHER EMBODIMENTS)

The embodiments of the present teaching have been described above, but the above embodiments are merely examples for carrying out the teaching. Thus, the teaching is not limited to the embodiments, and the embodiments may be modified as necessary within a range not departing from the gist of the teaching.

In the first embodiment, if the total work time is within the reference time, the process plan creator 13 increases the number of water pipes to be laid by one and has the work time calculator 12 calculate a laying work time, and determines a total work time of (N+1) pipes using the result. If the total work time is not within the reference time, the process plan creator 13 creates and outputs a process plan for laying (N-1) water pipes, where the number of the (N-1) water pipes is smaller by one than the N water pipes for which the total work time is obtained.

Alternatively, the process plan creator may calculate the total work time of the predetermined N water pipes so that if the total work time is not within the reference time, the process plan creator reduces the number of water pipes until the total work time fits within the reference time. In this case, the process plan creator creates and outputs a process plan for laying water pipes in a number corresponding to the total work time that fits within the reference time.

In the first embodiment, the information acquirer 11 acquires the work progress information and the construction information. Alternatively, the information acquirer may acquire information other than the work progress information and the construction information.

In the first embodiment, the data storage 14 stores the basic data. Alternatively, the data storage may store information acquired by the information acquirer and may also store data other than the basic data. The data storage may store data concerning a work time calculated by the work time calculator, or may store data concerning the total work time required by the process plan creator and data concerning the process plan created by the process plan creator.

In the second embodiment, the inputter 121 of the input terminal 102 acquires the work progress information and the construction information. Alternatively, the inputter may acquire information other than the work progress information and the construction information.

In the second embodiment, the server 101 includes the data storage 114. Alternatively, the input terminal may include a data storage. In this case, basic data and other data stored in the data storage are transmitted from the terminal-side communicator of the input terminal to the server-side communicator of the server.

In each of the embodiments, the work progress pattern includes the full parallel work pattern, the partial parallel work pattern, and the independent work pattern, and also includes a pattern in which the lengths of the work times of the processes are different in the full parallel work pattern, the partial parallel work pattern, and the independent work pattern. Alternatively, the work progress pattern may also include a pattern in which the order of processes is rearranged.

### INDUSTRIAL APPLICABILITY

The present teaching is applicable to a process plan creation device that creates a process plan of water pipe construction

### REFERENCE SIGNS LIST

- 1: process plan creation device
- 11: information acquirer
- 12, 112: work time calculator
- 13, 113: process plan creator
- 14, 114: data storage
- 100: process plan creation system
- 101: server
- 102: input terminal
- 115: server-side communicator
- 121: inputter
- 122: controller
- 123: terminal-side communicator

## Claims

1. A process plan creation device that creates a process plan of pipeline construction, the device comprising:
a data storage that stores basic data for use in creating the process plan;
an information acquirer that acquires information concerning a work progress pattern in the pipeline construction and construction information necessary for creating the process plan;
a work time calculator that calculates a work time in accordance with the work progress pattern using the basic data stored in the data storage and the information acquired by the information acquirer; and
a process plan creator that creates the process plan based on the work time calculated by the work time calculator.

2. The process plan creation device for the pipeline construction according to claim 1, wherein
the basic data stored in the data storage includes data concerning a reference work time of each process in the pipeline construction, and
the work time calculator calculates the work time of each process in accordance with the work progress pattern using the data concerning the reference work time.

3. The process plan creation device for the pipeline construction according to claim 2, wherein
the work time calculator creates a plurality of work times in accordance with the work progress pattern using the data concerning the reference work time, and
the process plan creator creates the process plan using a longest work time in the plurality of work times calculated by the work time calculator.

4. The process plan creation device for the pipeline construction according to claim 1, wherein
the work time calculator increases the number of pipes to be subjected to the pipeline construction within a predetermined period and calculates the work time of each number of pipes, and
if a total of the work times calculated by the work time calculator exceeds a predetermined value, the process plan creator creates the process plan based on a work time in a case where the number of pipes to be subjected to the pipeline construction within the predetermined period is reduced by one.

5. The process plan creation device for the pipeline construction according to any one of claims 1 to 4, wherein
the work progress pattern includes a work pattern in which an excavation process, a pipe installation process, and a backfilling process in the pipeline construction are performed independently of each other or at least some of the excavation process, the pipe installation process, and the backfilling process are performed in parallel.

6. A process plan creation system that creates a process plan of pipeline construction, the process plan creation system comprising:
an input terminal; and
a server capable of communicating with the input terminal, wherein
the input terminal includes
an inputter that inputs information concerning a work progress pattern in the pipeline construction and construction information necessary for creating the process plan, and
a terminal-side communicator capable of transmitting the information input to the inputter to the server, and
the server includes
a server-side communicator that receives the information transmitted from the terminal-side communicator,
a data storage that stores basic data for use in creating the process plan and stores the information received by the server-side communicator,
a work time calculator that calculates a work time in accordance with the work progress pattern using the basic data and the information stored in the data storage, and
a process plan creator that creates the process plan based on the work time calculated by the work time calculator.

7. A process plan creation method for creating a process plan of pipeline construction by a process plan creation device, the process plan creation method comprising:
a data acquisition step of causing a work time calculator of the process plan creation device to acquire basic data for use in creating the process plan from a data storage of the process plan creation device;
an information acquisition step of causing an information acquirer of the process plan creation device to acquire information concerning a work progress pattern in the pipeline construction and construction information necessary for creating the process plan;
a work time calculation step of causing the work time calculator to calculate a work time in accordance with the work progress pattern using the basic data acquired in the data acquisition step and the information acquired in the information acquisition step; and
a process plan creation step of causing a process plan creator of the process plan creation device to create the process plan based on the work time calculated in the work time calculation step.

8. A program for creating a process plan of pipeline construction, the program causing a computer to:
acquire basic data for use in creating the process plan from a data storage;
acquire information concerning a work progress pattern in the pipeline construction and construction information necessary for creating the process plan;
calculate a work time in accordance with the work progress pattern using the basic data and the acquired information; and
create the process plan based on the calculated work time.
